# EUROPÄISCHE PATENTSCHRIFT

(11) **EP 2 401 326 B1**
(45) Veröffentlichungstag und Bekanntmachung des Hinweises auf die Patenterteilung: **26.12.2012**
(21) Anmeldenummer: 09774614.3
(22) Anmeldetag: 11.12.2009
(51) Int. Cl.: C08L 67/02, C09D 167/02

(54) **PULVERFÖRMIGE ZUSAMMENSETZUNG, INSBESONDERE ZUR BESCHICHTUNG METALLISCHER SUBSTRATE**
POWDERY COMPOSITION, IN PARTICULAR FOR COATING METAL SUBSTRATES
COMPOSITION PULVÉRULENTE, EN PARTICULIER POUR LE REVÊTEMENT DE SUBSTRATS MÉTALLIQUES

(30) Priorität: 26.02.2009 CH 2882009
(43) Veröffentlichungstag der Anmeldung: 04.01.2012
(73) Patentinhaber: Schekolin AG, 9487 Gamprin-Bendern (LI)
(72) Erfinder: SCHOLLENBERGER, Claudio, CH-8625 Gossau (CH); SINGER, Andreas, CH-8636 Wald (CH)
(74) Vertreter: Schmauder, Klaus Dieter
(86) Internationale Anmeldenummer: PCT/CH2009/000391
(87) Internationale Veröffentlichungsnummer: WO 2010/096938

(56) Entgegenhaltungen:
- EP-A1- 0 408 465
- EP-A1- 1 550 915
- WO-A1-00/55268
- WO-A1-97/44394
- WO-A1-2006/125545

## Beschreibung

### Technisches Gebiet

Die Erfindung betrifft eine pulverförmige Zusammensetzung, insbesondere zur Beschichtung metallischer Substrate.

### Stand der Technik

Eine Zusammensetzung der eingangs genannten Art ist beispielsweise aus der WO 00/55268 bekannt. Die dort beschriebene pulverförmige Zusammensetzung zur Beschichtung eines metallischen Substrates, wie beispielsweise der Wandung einer Metalldose oder eines anderen Metallbehälters, ist insbesondere dazu ausgelegt, eine gut haftende, chemisch und mechanisch beständige Schutzschicht auf das Substrat anzubringen.

Die in der WO 00/55268 beschriebene Zusammensetzung umfasst die folgenden Komponenten:
a) etwa 50% bis etwa 100%, bezogen auf das Gesamtgewicht der Zusammensetzung, eines Polyestergemisches, welches umfasst:
   i) einen ersten Copolyester mit einem gewichtsmittleren Molekulargewicht von ungefähr 10'000 bis ungefähr 80'000 und einer Glasumwandlungstemperatur von mehr als 45°C bis ungefähr 100°C; und
   ii) einen zweiten Copolyester mit einem gewichtsmittleren Molekulargewicht von ungefähr 10'000 bis ungefähr 70'000 und einer Glasumwandlungstemperatur von ungefähr -10°C bis ungefähr 45°C;
   wobei die Glasumwandlungstemperatur des ersten Polyesters ungefähr 5°C bis ungefähr 60°C höher ist als diejenige des zweiten Polyesters;
b) 0% bis etwa 25%, bezogen auf das Gesamtgewicht der Zusammensetzung, eines modifizierenden Harzes;
c) 0% bis zu etwa 50%, bezogen auf das Gesamtgewicht der Zusammensetzung, eines anorganischen Füllstoffes;
d) 0% bis zu etwa 4%, bezogen auf das Gesamtgewicht der Zusammensetzung, eines Verlaufadditivs; und
e) 0% bis zu etwa 50%, bezogen auf das Gesamtgewicht der Zusammensetzung, eines zweiten modifizierenden Polymers.

Ein wesentlicher Aspekt der Pulverzusammensetzung gemäss der WO 00/55268 liegt anscheinend darin, dass das als Hauptkomponente vorliegende Polyestergemisch zwei Copolyester mit unterschiedlichen Glasumwandlungstemperaturen beinhaltet. Die Glasumwandlungstemperatur (Tg) eines Polymers ist die Temperatur, bei welcher ein Übergang von einem spröden Glaszustand in einen plastischen Zustand stattfindet. Bei der Pulverzusammensetzung gemäss der WO 00/55268 weist der eine Copolyester eine vergleichsweise hohe Glasumwandlungstemperatur von mehr als 45°C bis ungefähr 100°C auf, während der andere Copolyester eine vergleichsweise niedrige Glasumwandlungstemperatur von ungefähr -10°C bis ungefähr 45°C aufweist, wobei sich die besagten Glasumwandlungstemperaturen um mindestens 5°C bis 60°C, vorzugsweise um 15°C bis 35°C und insbesondere um ungefähr 20°C bis ungefähr 30°C unterscheiden. Gemäss der WO 00/55268 sind die mit solchen Pulverzusammensetzungen hergestellten Beschichtungen genügend flexibel, so dass sie ohne Bildung von Rissen mechanisch deformiert werden können. Gleichzeitig sind die besagten Beschichtungen aber auch genügend hart, um eine vorzügliche Kratz- und Abriebfestigkeit zu gewährleisten.

### Darstellung der Erfindung

Aufgabe der Erfindung ist es, weitere pulverförmige Zusammensetzungen für die Beschichtung metallischer Substrate bereitzustellen, die sich insbesondere als sogenannte Nahtschutzpulver, aber auch als vollflächige Pulverbeschichtungen aus Schutz- und Ästhetikgründen, eignen.

Diese Aufgabe wird erfindungsgemäss gelöst durch die im Anspruch 1 definierte Zusammensetzung.

Die erfindungsgemässe pulverförmige Zusammensetzung umfasst:
a) 70% bis 80%, bezogen auf das Gesamtgewicht der Zusammensetzung, eines Polyestergemisches, welches umfasst:
   i) 57% bis 58%, bezogen auf das Gewicht des Polyestergemisches, eines ersten Copolyesters mit einem Schmelzintervall von 162°C bis 172°C, einer Glasumwandlungstemperatur von 25 bis 28°C, einer Schmelzviskosität (bei 190°C / 2.16 kg) von 650 Pa·s und einem Schmelzvolumenindex MVR (bei 190°C / 2.16 kg) von 16 cm³/10 min;
   ii) 35% bis 36%, bezogen auf das Gewicht des Polyestergemisches, eines zweiten Copolyesters mit einem Schmelzintervall von 150°C bis 160°C, einer Glasumwandlungstemperatur von 25 bis 26°C, einer Schmelzviskosität (bei 190°C / 2.16 kg) von 300 Pa·s und einem Schmelzvolumenindex MVR (bei 190°C / 2.16 kg) von 35 cm³/10 min;
   iii) 7%, bezogen auf das Gewicht des Polyestergemisches, eines dritten Copolyesters mit einem Schmelzintervall von 157°C bis 167°C, einer Glasumwandlungstemperatur von 18 bis 23°C, einer Schmelzviskosität (bei 190°C / 2.16 kg) von 850 Pa·s und einem Schmelzvolumenindex MVR (bei 190°C / 2.16 kg) von 12 cm³/10 min;
b) 0% bis zu 19.2%, bezogen auf das Gesamtgewicht der Zusammensetzung, eines anorganischen Füllstoffes; und
c) 0% bis zu 0.8%, bezogen auf das Gesamtgewicht der Zusammensetzung, eines Verlaufadditivs;
d) 0% bis zu 10%, bezogen auf das Gesamtgewicht der Zusammensetzung, eines Farbpigments.

Überraschend wurde gefunden, dass die erfindungsgemässe Zusammensetzung aufgrund der Auswahl von drei Copolyestern mit wohlbestimmten Eigenschaften zur Beschichtung von metallischen Substraten geeignet ist, auch wenn sie im Gegensatz zur WO 00/55268 keinen Copolyester mit einer über 45°C liegenden Glasumwandlungstemperatur enthält.

Die drei Copolyester lassen sich durch Veresterung einer Säurekomponente und einer Diolkomponente darstellen. Vorteilhafterweise ist in allen drei Copolyestern die Säurekomponente eine Mischung aus hauptsächlich Terephthalsäure und Isophthalsäure, während die Diolkomponente entweder Butandiol oder eine Mischung aus Butandiol und Ethylenglykol ist. Eine besonders bevorzugte Auswahl der drei Copolyester ist in Tabelle 1 angegeben.

**Tabelle 1 Bevorzugte Copolyester-Zusammensetzungen**

| | Erster Copolyester | Zweiter Copolyester | Dritter Copolyester |
|---|---|---|---|
| Molverhältnis Iso- : Terephthalsäure | 1.00 : 2.30 | 1.00 : 3.65 | 1.00 :2.48 |
| Molverhältnis Butandiol : Ethylenglykol | 0.00 | 1.00 : 4.80 | 0.00 |
| Zahlenmittlere Molmasse Mₙ [g/mol] | 26'900 | 22'500 | 26'200 |
| Gewichtsmittlere Molmasse M_{w} [g/mol] | 69'300 | 54'300 | 68'300 |
| Schmelzintervall [°C] | 162 bis 172 | 150 bis 160 | 157 bis 167 |
| Glasumwandlungstemperatur [°C] | 25 bis 28 | 25 bis 26 | 18 bis 23 |
| Schmelzviskosität bei 190°C / 2.16 kg [Pa·s] | 650 | 300 | 850 |
| Schmelzvolumenindex MVR bei 190°C / 2.16 kg [cm³/10 min] | 16 | 35 | 12 |
| Harztyp Griltex^{®} D | 2036 E | 1874 E | 1982 E |

In einer bevorzugten Ausgestaltung besteht der erste Copolyester aus Griltex^{®} D 2036 E, der zweite Copolyester aus Griltex^{®} D 1874 E und der dritte Copolyester aus Griltex^{®} D 1982 E. Diese handelsüblichen Copolyester können bei Ems-Chemie, Domat-Ems (Schweiz) bezogen werden.

### Wege zur Ausführung der Erfindung

Die in den nachfolgenden Ausführungsbeispielen 1 bis 3 angegebenen Zusammensetzungen gemäss Tabelle 2 werden jeweils zu einem Compound verarbeitet. Anschliessend wird mittels Kaltvermahlung und Siebung ein Pulver mit einer Korngrösse von weniger als ungefähr 100 µm, vorzugsweise von 15 bis 70 µm hergestellt. Das Pulver wird mittels einer Elektrostatik-Sprühvorrichtung auf dünne Metallbleche aufgesprüht und danach 40 Sekunden bei 280°C in einem Ofen aufgeschmolzen. Nach Abkühlung auf Raumtemperatur ergibt sich eine Beschichtung mit einer Schichtdicke von weniger als ungefähr 100 µm und vorzugsweise von 15 bis 70 µm.

**Tabelle 2 Pulverförmige Zusammensetzungen**

| Bestandteil | Produktname | Gehalt in Gewichts-% | | |
|---|---|---|---|---|
| | | Beispiel 1 | Beispiel 2 | Beispiel 3 |
| Erster Copolyester | Griltex^{®} D 2036 E | 40.0 | 43.6 | 46.4 |
| Zweiter Copolyester | Griltex^{®} D 1874 E | 25.0 | 26.2 | 28.0 |
| Dritter Copolyester | Griltex^{®} D 1982 E | 5.0 | 5.2 | 5.6 |
| Farbpigment | Titandioxid | 10.0 | 7.0 | - |
| Farbpigment | Eisenoxid-alpha | - | 1.0 | - |
| Farbpigment | Carbon Black | - | 0.14 | - |
| Füllstoff | Glimmer | 3.0 | 3.0 | 3.0 |
| Füllstoff | Aluminiumsilikat | 3.2 | 3.2 | 3.2 |
| Füllstoff | Bariumsulfat | 13.0 | 9.86 | 13.0 |
| Verlaufadditiv | Lanco Flow P 10 | 0.8 | 0.8 | 0.8 |
| Total | | 100.0 | 100.0 | 100.0 |
| Farbe | | weiss | grau | transparent |

Titandioxid kann beispielsweise in Form des handelsüblichen Produktes Kronos 2430 bezogen werden.

Eisenoxid-alpha (FeOOH) kann beispielsweise in Form des handelsüblichen Produktes Bayferrox 3910 bezogen werden.

Carbon Black, auch als Industrieruss bezeichnet, kann beispielsweise in Form des handelsüblichen Produktes Printex V bezogen werden.

Glimmer kann beispielsweise in Form des handelsüblichen Produktes Micro Mica W1 bezogen werden.

Aluminiumsilikat kann beispielsweise in Form des handelsüblichen Produktes ASP 400 P bezogen werden.

Bariumsulfat kann beispielsweise in Form des handelsüblichen Produktes Blanc Fixe N bezogen werden.

Lanco Flow P 10 ist ein handelsübliches Verlaufadditiv auf Basis eines Acrylatpolymers.

Es versteht sich, dass anstelle der oben erwähnten Farbpigmente je nach Anwendung auch andere Farbpigmente gewählt werden können, wobei das Mischungsverhältnis Farbpigment : Füllstoff gegebenenfalls anders zu wählen ist.

### Einlagerungstest

Weissblechabschnitte wurden mit der Zusammensetzung gemäss Beispiel 1 oder mit einer von drei herkömmlichen Zusammensetzungen beschichtet. Dabei handelte es sich um je ein epoxidhaltiges Polybutylenterephthalat-Pulver ("PBT/Epoxy", Vergleichsbeispiele 1 und 2) sowie um ein epoxidfreies Polybutylenterephthalat-Pulver ("PBT", Vergleichsbeispiel 3).

Die beschichteten Blechabschnitte wurden bei 124°C während 70 Min. sterilisiert. Danach wurden sie bei 70°C in einem von 12 Prüfmedien während 5 Tagen oder 10 Tagen eingelagert. Schliesslich wurde die Beschichtung jeweils mittels eines Kreuzschnitts bzw. eines Knicktests geprüft. Die Ergebnisse dieses Einlagerungstests finden sich in Tabelle 3.

**Tabelle 3 Einlagerungstest beschichteter Metallsubstrate: Schichtablösung (in mm) bei Kreuzschnitt / Knicktest**

| | **Vergleichsbeispiel 1** | | **Vergleichsbeispiel 2** | | **Vergleichsbeispiel 3** | | **Beispiel 1** | |
|---|---|---|---|---|---|---|---|---|
| | **PBT/Epoxy** | | **PBT/Epoxy** | | **PBT** | | **Erfindung** | |
| **Einlagerungszeit bei 70°C** | **5 Tage** | **10 Tage** | **5 Tage** | **10 Tage** | **5 Tage** | **10 Tage** | **5 Tage** | **10 Tage** |
| **Prüfmedien** | | | | | | | | |
| D | 0/0 | 0/0 | 0/0 | 0/0 | 0/0 | 010 | 0/0 | 0/0 |
| S | X | X | X | X | X | X | X | X |
| R | 0/0 | 0/0 | 0/0 | 0/0 | 0/0 | 5/0 | 0/0 | 0/0 |
| O | 0/0 | 0/0 | 0/0 | 0/0 | 0/0 | 0/0 | 0/0 | 0/0 |
| Methylalkohol | 5/2 | X | 10/0 | X | 2/0 | X | 2/0 | X |
| Ethylalkohol | 0/0 | 0/0 | 5/0 | 5/0 | 1/0 | 0/0 | 0/0 | 0/0 |
| Isopropylalkohol | 0/0 | 0/0 | 4/0 | 4/0 | 0/0 | 7/0 | 0/0 | 0/0 |
| Diethylenglycol monobutylether | 0/0 | 0/0 | 3/0 | 3/0 | 5/0 | 0/0 | 0/0 | 0/0 |
| Leichtes Heizöl EL | 1/0 | 0/0 | 3/0 | 3/2 | 3/0 | 3/0 | 0/0 | 0/0 |
| Toluol | 0/0 | 0/0 | 0/0 | 0/0 | 0/0 | 0/0 | 0/0 | 0/0 |
| Tomaten | 0/0 | 0/0 | 0/0 | 0/0 | 0/0 | 3/0 | 0/0 | 0/0 |
| Thunfisch | 0/0 | 0/0 | 0/0 | 0/0 | 0/0 | 0/0 | 0/0 | 0/0 |

| | | | | | | | | |
|---|---|---|---|---|---|---|---|---|
| Legende: X Innenbeschichtung (Flüssiglack) zerstört D, S, R, O Einlagerungsmedien | | | | | | | | |

### Resistenztest

Es wurden beschichtete Weissblechabschnitte wie für den Einlagerungstest (s. oben) hergestellt und danach bei Raumtemperatur während 21 Tagen in eines von 29 Prüfmedien getaucht. Die Ergebnisse der anschliessenden Überprüfung der Beschichtungen finden sich in Tabelle 4.

**Tabelle 4 Resistenztest beschichteter Metallsubstrate**

| | **Vergleichsbeispiel 1** | **Vergleichsbeispiel 2** | **Vergleichsbeispiel 3** | **Beispiel 1** |
|---|---|---|---|---|
| | **PBT/Epoxy** | **PBT/Epoxy** | **PBT** | **Erfindung** |
| **Prüfmedium** | | | | |
| Methylalkohol | +++ / - | ++ / -- | +++ / - | ++++ |
| Ethylalkohol | ++++ | ++/-- | ++++ | ++++ |
| Isopropylalkohol | ++++ | +++ / - | +++ / - | ++++ |
| n-Butylalkohol | ++++ | ++ / -- | ++++ | ++++ |
| 4-Hydro-4-methyl-2-pentanon | ++ / --- | --- | +++ / - | +++ / - |
| N-Methyl-2-pyrrolidon | + / --- | ---- | + / --- | ++ / -- |
| Propylenglycolmethylether acetat | ++ / -- | + /--- | +++ / - | +++ / - |
| Ethylenglycolmonoisopropylether | +++ / - | ++ / -- | ++++ | ++++ |
| Diethylenglycolmonobutylether | ++ / -- | ---- | ++++ | ++++ |
| Aceton | + / --- | ---- | ++ / -- | +++ / - |
| Methylethylketon | + / --- | ---- | ++ /-- | ++/-- |
| Isobutylmethylketon | ++ / -- | + / --- | +++ / - | +++ / - |
| Cyclohexanon reinst | + / --- | ---- | ++ / -- | +++ / - |
| Isophoron | ++/ -- | ---- | +++ / - | +++ / - |
| Essigsäureethylester | ++ / -- | ---- | ++ / -- | +++ / - |
| Essigsäure-n-butylester | +++/ - | ++ / -- | +++ / - | ++++ |
| Spezialbenzin 100/140 EA | ++++ | ++++ | ++++ | ++++ |
| Testbenzin 145/200 | ++++ | ++++ | ++++ | ++++ |
| Leichtes Heizöl EL | ++++ | ++++ | ++++ | ++++ |
| Nitroethan | ++ / -- | --- | ++ / -- | +++ / - |
| N,N-Dimethylformamid | ++/ -- | --- | ++ / -- | +++ / - |
| Diethylether | +++ / - | ++ / -- | ++++ | ++++ |
| Toluol | + / --- | --- | ++ / -- | +++ / - |
| Xylol | ++ / -- | ++ / -- | +++ / - | +++ / - |
| Decahydronaphthalin | ++++ | ++++ | ++++ | ++++ |
| Tetrahydrofuran reinst | + / --- | ----- | + / --- | ++ / -- |
| Monopropylenglycolmonomethylether | ++ / -- | + / --- | +++ / - | +++ / - |
| Motorenöl 15/W40 | ++++ | ++++ | ++++ | ++++ |
| Leitungswasser | ++++ | ++++ | ++++ | ++++ |

| | | | | |
|---|---|---|---|---|
| Legende: ++++ Resistenz unverändert +++ / - leichte Erweichung, Haftung i.O ++ / -- Erweichung, Glazverlust, leichter Haftungsverlust + /--- starke Erweichung , Glanzverlust, Haftungsverlust ---- Beschichtung zerstört, Blasenbildung, kompletter Hafungsverlust | | | | |

### Schlussbemerkungen

Als metallische Substrate kommen insbesondere Weissblech, ECCS-Blech (electrolytic chromium coated steel) bzw. TFS-Blech (tin free steel) sowie Aluminiumteile in Frage. Bekanntlich werden Weissblech sowie ECCS- bzw. TFS-Blech für Deckel und zweiteilige Dosen verwendet; Aluminium wird ebenfalls für Deckel und zweiteilige Dosen, aber auch für Monoblock-Aerosoldosen und für Aluminiumtuben verwendet.

Die erfindungsgemässe pulverförmige Zusammensetzung zeichnet sich bei der Beschichtung metallischer Substrate insbesondere durch folgende Vorteile gegenüber herkömmlichen lösemittelhaltigen Lacksystemen aus:
- VOC-frei und somit emissionsfrei;
- kein Gefahrgut für den Transport;
- Einlagerung ohne gesetzliche Restriktionen;
- "100%-System", d.h. 1 kg Pulver ergibt 1 kg Beschichtung.

## Patentansprüche

1. Pulverförmige Zusammensetzung, insbesondere zur Beschichtung metallischer Substrate, welche umfasst:
a) 70% bis 80%, bezogen auf das Gesamtgewicht der Zusammensetzung, eines Polyestergemisches, welches umfasst:
i) 57% bis 58%, bezogen auf das Gewicht des Polyestergemisches, eines ersten Copolyesters mit einem Schmelzintervall von 162°C bis 172°C, einer Glasumwandlungstemperatur von 25 bis 28°C, einer Schmelzviskosität (bei 190°C / 2.16 kg) von 650 Pa·s und einem Schmelzvolumenindex MVR (bei 190°C / 2.16 kg) von 16 cm³/ 10 min;
ii) 35% bis 36%, bezogen auf das Gewicht des Polyestergemisches, eines zweiten Copolyesters mit einem Schmelzintervall von 150°C bis 160°C, einer Glasumwandlungstemperatur von 25 bis 26 °C, einer Schmelzviskosität (bei 190°C / 2.16 kg) von 300 Pa·s und einem Schmelzvolumenindex MVR (bei 190 °C / 2.16 kg) von 35 cm³/10 min;
iii) 7%, bezogen auf das Gewicht des Polyestergemisches, eines dritten Copolyesters mit einem Schmelzintervall von 157°C bis 167°C, einer Glasumwandlungstemperatur von 18 bis 23°C, einer Schmelzviskosität (bei 190°C / 2.16 kg) von 850 Pa·s und einem Schmelzvolumenindex MVR (bei 190°C / 2.16 kg) von 12 cm³/10 min;
b) 0% bis zu 19.2%, bezogen auf das Gesamtgewicht der Zusammensetzung, eines anorganischen Füllstoffes; und
c) 0% bis zu 0.8%, bezogen auf das Gesamtgewicht der Zusammensetzung, eines Verlaufadditivs;
d) 0% bis zu 10%, bezogen auf das Gesamtgewicht der Zusammensetzung, eines Farbpigments.

## Claims

1. A powder composition, particularly for coating a metal substrate, comprising:
a) 70% to 80%, by total weight of the composition, of a blend of polyesters comprising:
i) 57% to 58%, by total weight of the blend of polyesters, of a first copolyester having a melting interval of 162°C to 172°C, a glass transition temperature of 25 to 28°C, a melting viscosity (at 190°C /2.16 kg) of 650 Pa·s and a melting volume index MVR (at 190°C /2.16 kg) of 16 cm³/10 min;
ii) 35% to 36%, by total weight of the blend of polyesters, of a second copolyester having a melting interval of 150°C to 160°C, a glass transition temperature of 25 to 26°C, a melting viscosity (at 190°C /2.16 kg) of 300 Pa·s and a melting volume index MVR (at 190°C /2.16 kg) of 35 cm³/ 10 min;
iii) 7%, by total weight of the blend of polyesters, of a third copolyester having a melting interval of 157°C to 167°C, a glass transition temperature of 18 to 23°C, a melting viscosity (at 190°C / 2.16 kg) of 850 Pa·s and a melting volume index MVR (at 190°C / 2.16 kg) of 12 cm³/10 min;
b) 0% to 19.2%, by total weight of the composition, of an inorganic filler material;
c) 0% to 0.8%, by total weight of the composition, of a flow control agent; and
d) 0% to 10%, by total weight of the composition, of a dye pigment.

## Revendications

1. Composition en poudre, en particulier pour un revêtement des substrats métalliques, qui comprend:
a) 70% à 80%, par rapport au poids total de la composition, d'un mélange de polyester; comprenant:
i) 57% à 58%, par rapport au poids du mélange de polyester, d'un premier copolyester avec un intervalle de fusion de 162°C à 172°C, une température de transition vitreuse de 25 à 28°C, une viscosité à l'état fondu (à 190°C/2,16 kg) de 650 Pa·s et un melt flow index MFI (à 190°C/2,16 kg) de 16 cm³/10 min;
ii) 35% à 36%, par rapport au poids du mélange de polyester, d'un second copolyester avec un intervalle de fusion de 150°C à 160°C, une température de transition vitreuse de 25 à 26°C, une viscosité à l'état fondu (à 190°C/2,16 kg) de 300 Pa·s et un melt flow index MFI (à 190°C/2,16 kg) de 35 cm³/10 min;
iii) 7%, par rapport au poids du mélange de polyester, d'un troisième copolyester avec un intervalle de fusion de 157°C à environ 167°C, une température de transition vitreuse de 18 à 23°C, une viscosité à l'état fondu (à 190°C/2,16 kg) de 850 Pa·s et un melt flow index MFI (à 190°C/2,16 kg) de 12 cm³/10 min;
b) 0% jusqu'à 19,2%, par rapport au poids total de la composition, d'une charge inorganique; et
c) 0% jusqu'à 0,8%, par rapport au poids total de la composition, d'un additif d'écoulement;
d) 0% jusqu'à 10%, par rapport au poids total de la composition, d'un pigment de couleur.
